# EUROPEAN PATENT APPLICATION

(11) **EP 4 382 347 A1**
(43) Date of publication of application: **12.06.2024**
(21) Application number: 22461640.9
(22) Date of filing: 07.12.2022
(51) Int. Cl.: B60L 53/10, B60L 53/62, B60L 53/67, H02J 1/04

(54) **A CHARGING STATION FOR ELECTRIC VEHICLES, HAVING A MATRIX OUTPUT, AND METHOD**

(71) Applicant: Ekoenergetyka-Polska S.A., 66-002 Zielona Gora (PL)
(72) Inventor: JARNUT, Marcin, 66-002 Zielona Gora (PL); MALECKI, Michal, 66-002 Zielona Gora (PL); PILIMON, Lukasz, 66-002 Zielona Gora (PL); SKOWRONSKI, Zbigniew, 66-002 Zielona Gora (PL); STELMASZYK, Blazej, 66-002 Zielona Gora (PL); KANIEWSKI, Jacek, 66-002 Zielona Gora (PL)
(74) Representative: Kancelaria Eupatent.pl Sp. z.o.o

(57) **Abstract**

The invention relates to a charging station (100) for electric vehicles (171 - 176), with a matrix output. Said charging station (100) comprises: at least two (N) power blocks (110), each having at least two (M) power modules (311 - 316); at least two (K) charging points (130) compliant with the corresponding outputs (101 - 106) of the charging station (100) provided with respective charging connectors (431, 441); an output matrix circuit - a switch matrix (120) with a specific number of inputs (N) and a number of outputs (K); a control unit (140) and additional units (150). There is also disclosed a method for controlling the charging station (600).

## Description

### TECHNICAL FIELD

The present invention relates to a high-power DC fast charging station for electric vehicles, wherein the station has a matrix output, enabling simultaneous charging of a plurality of vehicles.

### BACKGROUND

Public transport system based on electric wheeled vehicles needs solutions for charging many vehicles at the same time. The number of vehicles charged at the same time depends on a location of a charging station and is different in the case of "depot" or "parking" locations and "loop" or "transit" locations. In the first case, charging of vehicles (for example buses) is carried out most often during the night, when the vehicles are parked for long periods of time (such as over 6 hours), in contrast to charging on loops of communication routes (up to 30 minutes).

Charging stations designed for a particular charging configuration differ in functional features (such as requiring or not requiring the use of a charging interface), configuration (such as the location of charging stations, charging interface) and charging parameters (in particular, charging power). The "depot" or "parking" stations are equipped mainly with cabled charging interfaces and require physical handling of the station-vehicle charging interface by a driver or a technician. The charging connector is placed at a charging point adjacent to the vehicle's parking stand and away from the charging station containing power blocks formed of AC/DC converter power modules. The charging station usually contains one (parallel parking) or two (perpendicular or diagonal parking) charging points with cable connectors, serving vehicles in adjacent parking spaces. The configuration is different in the case of "loop" stations. Due to the limited time of the vehicle stoppage and the need for optimal use for the driver's rest, such stations are most often equipped with automated pantograph interfaces (such as Panto-Up or Panto-Down), wherein the driver's participation is limited to correct positioning of the vehicle in relation to the connector and remote initialization and ending of the charging process. Depending on the size of the fleet of vehicles, the number of charging points serviced by a single "depot" or "parking" station varies from several to even several dozen charging points. A characteristic feature of the "depot" or "parking" stations, due to the way they are used, is a high level of simultaneous use of individual charging points (outputs) of the charging station, exceeding 50%. There are also "depot" charging stations equipped with a single charging point with a pantograph output (with a high current capacity, such as above 500 A), intended for emergency, quick energy replenishment, for example in a bus withdrawn from the route in an emergency. In the case of "loop" stations, the number of simultaneously operated charging points usually does not exceed four and most often there are two charging points with pantograph outputs. Due to the critical nature of the charging infrastructure for public transport vehicles and the possibility of damage to the moving parts of the pantograph interfaces, the "loop" charging stations are equipped with additional charging points with cable connectors.

Considering the functional properties indicated above and the need for rational management of the load power of multi-output high-power charging stations in public transport systems, there is a need for solutions for charging stations having a matrix output, implemented by a configurable output matrix circuit - a switch matrix.

There are known charging stations with multiple charging ports. One way to implement such stations is to use an AC/DC converter and then apply a DC bus to which the charging ports are connected. The disadvantage of such a solution is that multiple vehicles cannot be charged at the same time, as each vehicle typically has a different input voltage. In order to be able to charge multiple electric vehicles simultaneously, it is necessary to use DC/DC converters for each charging port.

US5847537A discloses an electric vehicle charging system comprising multiple charging ports (points). However, the system has a single power converter and due to the different input voltages of each vehicle, it cannot be used to charge multiple vehicles simultaneously.

US7135836B2 discloses a modular battery charger comprising an AC/DC converter, a DC bus and charging ports connected to the DC bus. This solution also cannot be used to charge multiple vehicles at the same time, due to the different input voltages of each vehicle.

US20200039378A1 discloses a system for charging stations for electric vehicles, having a variable number of power electronic modules and a variable number of charging points. Said system may include up to two charging points and up to two charging columns, which include power electronics modules for converting electricity taken from the distribution network and delivered in the correct form to the vehicles being charged.

US7768229B2 discloses a solution for an electric vehicle charging station, which includes a system for power supply from the power grid, an electric vehicle charging system and a battery system. This solution ensures that one vehicle is charged by one electric vehicle charging system. There can be many charging systems in the area of a single charging station.

US5926004A discloses a charging station for one or more electric vehicles and a method for controlling thereof. Said charging station is built of multiple power converters and a switch that allows the power converters to be selectively connected to each other to deliver more power to a priority connector (output) to charge a single electric vehicle or connect power converters to their corresponding connectors (outputs) to charge multiple vehicles. The disadvantage of this solution is that the power converters cannot be freely configured (shared and used) for the remaining connectors (outputs), as is the case with the priority connector (output).

### SUMMARY

The object of the present invention is a high-power DC fast charging station for electric vehicles having a matrix output, with interfaces enabling connection and communication with the power grid and with at least one charged electric vehicle. The presented charging station comprises: at least two power blocks, each comprising at least two AC/DC converter power modules, with the same number of power modules in each power block; at least two charging points (compliant with the corresponding outputs of the charging station) equipped with particular charging connectors; a matrix output circuit - a switch matrix with the number of inputs and the number of outputs resulting from the number of power blocks used and the number of charging points; a control unit that manages the configuration of the charging station and is responsible for control and communication with: each of the power blocks, their power modules, the matrix output circuit - the switch matrix and the charging points; and additional units that provide other functionalities of the charging station.

Preferably, the control unit, depending on: configuration data, diagnostic results, assignment of power blocks to charging points, number of charged vehicles and charging parameters reported by these vehicles:
a) defines control strategies for the charging station;
b) sets the charging station control regime;
c) configures the output matrix circuit - the switch matrix by setting its individual switches in the applied sets of switches, providing a defined parallel connection of the outputs of selected power blocks and their connections to specific charging points and, consequently, to the outputs of the charging station;
d) determines, based on the number of charging cycles and/or the degree of utilization of the power block's rated power, which of the power blocks and in what order should be used in the next charging cycle;
e) determines, on the basis of selected operating parameters of the power module (the power at which the power module has reached its maximum efficiency, the number of charging cycles and/or the degree of utilization of the rated power of the power module), operating parameters for power modules within each power block.

Preferably, the output matrix circuit - the switch matrix, correspondingly configured by the control unit enables:
- connecting any power block to any single charging point;
- connecting a certain number of unused power blocks to a selected, single charging point;
- connecting only one unused power block to a selected, single charging point.

Preferably, those unused power blocks, for which the number of charging cycles and/or the degree of utilization of the rated power of the power block is the smallest, are first connected to the selected charging point.

Preferably, the unused power blocks are connected first to the charging point - the output of the charging station with the highest priority at a particular moment.

Preferably, it is possible to define priorities for individual charging points - outputs of the charging station as follows:
- the highest priority is permanently assigned to the selected charging point - the output of the charging station;
- priority is assigned to the charging points - the outputs of the charging station dynamically, depending on the order in which the activation of charging sessions-cycles is reported at a particular charging point - the output of the charging station;
- each charging point - the output of the charging station has a strictly defined priority.

Preferably, the individual power modules in each selected power block are activated and controlled sequentially until the required total power of the power block is reached, while the activation and control of the next power module take place after the previously activated power modules reach the set power level.

Preferably, the fixed power level of the power module is equal to the rated power of the power block or the power at which the particular power module achieves maximum efficiency.

Preferably, the individual power modules in each selected power block are activated and controlled in the order resulting from the selected operating parameters of the power modules, with the first being activated are those power modules for which the number of charging cycles and/or the degree of utilization rated power of the power module is the smallest.

Another object of the invention is a method for controlling the charging station. The method is implemented by a control unit and is responsible for: configuration, management, control, and communication with individual unitsmodules of the charging station.

### BRIEF DESCRIPTION OF THE DRAWINGS

The present invention is shown by means of example embodiments in a drawing, wherein:
Fig. 1 shows a detailed block diagram of an electric vehicle charging station having a matrix output;
Fig. 2 shows a detailed functional diagram of the power blocks of Fig. 1;
Fig. 3 shows a block diagram of the configurable output matrix circuit, i.e. the switch matrix of Fig. 1;
Fig. 4 shows a block diagram of the charging station control unit of Fig. 1;
Fig. 5A and Fig. 5B show data stored in the digital memory of the control unit of Fig. 4;
Fig. 6 shows a detailed block diagram of the charging points of Fig. 1,
Fig. 7 shows an example of a configuration of the power block of Fig. 2;
Fig. 8 shows a first example of a configuration of the charging station of Fig. 1, using the power blocks of Fig. 7;
Fig. 9 shows a second example of a configuration of the charging station of Fig. 1 using the power blocks of Fig. 7;
Fig. 10 shows a third example of a configuration of the charging station of Fig. 1 using the power blocks of Fig. 7;
Fig. 11A shows a first embodiment of the configurable output matrix circuit - the switch matrix used in the charging station of Fig. 10;
Fig. 11B shows the second embodiment of the configurable output matrix circuit - the switch matrix, used in the charging station of Fig. 10;
Fig. 12 shows the fourth configuration of the charging station of Fig. 1 in situations wherein the charging is performed in the order: the first, then the first and the second simultaneously and next the first, second and third simultaneously;
Figs. 13A - 13C show sequential configurations of the switch matrix for the corresponding charging situations depicted in Fig. 12 and when free use of the power blocks assigned to the respective unused charging points is possible;
Fig. 14 shows the configuration of the switch matrix in the situation of charging three vehicles simultaneously as in Fig. 12, wherein it is not possible to freely use the power blocks assigned to the respective unused charging points;
Fig. 15 shows an overview of the method for controlling the charging station of Fig. 1;
Figs. 16A - 16C show a detailed method for controlling the charging station of Fig. 1.

### DETAILED DESCRIPTION

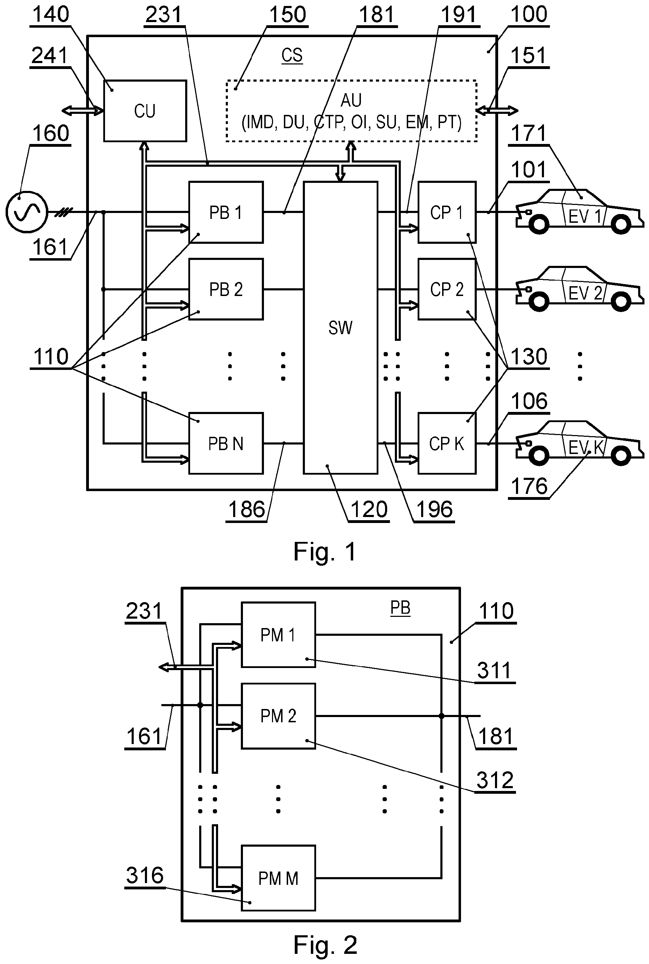

Fig. 1 shows a detailed block diagram of a charging station (CS) 100 having a matrix output, enabling the sharing of power blocks between individual charging points. According to Fig. 1, the charging station 100 may comprise: at least two power blocks (PB) 110, a control unit (CU) 140, a configurable output matrix circuit, i.e. a switch matrix (SW) 120, additional units (AU) 150, connections 161 with a power grid 160, at least two charging points (CP) 130, connections 101-106 with electric vehicles (EV) 171-176 and links 241 and 151 for enabling communication of the charging station with other charging stations, charging station management systems etc.

For sake of clarity of the presentation, Fig. 1 does not contain protection systems and modules, such as Residual Current Devices (RCD), Surge Protection Devices (SPD), ElectroMagnetic Compatibility (EMC) filters etc. and the AC and DC connections are simplified.

N (N≥2) inputs of the power blocks 110 (PB 1, PB 2, ..., PB N) are connected in parallel and are connected to a connection 161 to the power grid 160. Each of the N power blocks 110 is made of M (M≥2) power modules (PM) 311-316, implemented as AC/DC converter power modules. Each of the N outputs 181-186 of the power blocks 110 is a parallel connection of the outputs of the power modules 311-316 (PM 1, PM 2, ..., PM M) from which the respective power block 110 is formed. The outputs 181-186 are connected to the corresponding N inputs of the configurable output matrix circuit, namely the switch matrix 120.

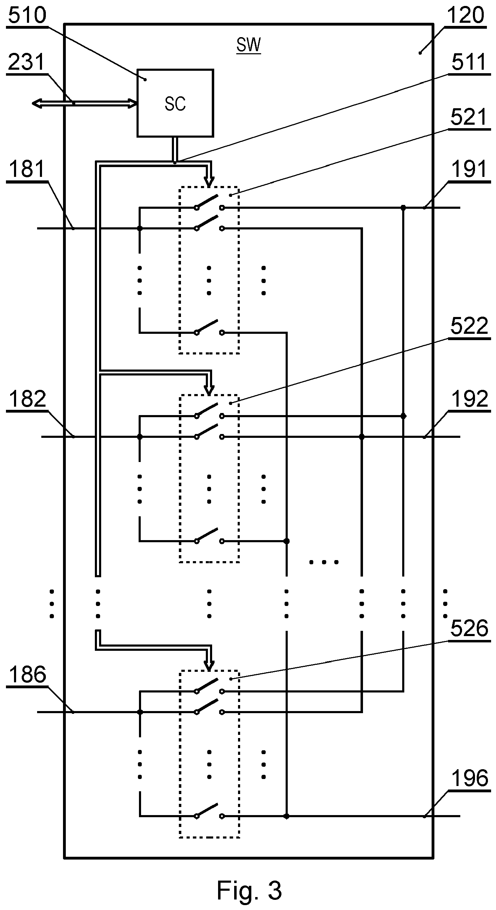

The role of the configurable output matrix circuit, the switch matrix 120 (detailed in Fig. 3), depending on the adopted strategy and control regime 222 of the charging station 100, is to provide parallel connection of the outputs 181-186 of the power blocks 110 and connect them to the selected output 191-196 of the switch matrix 120. The K outputs 191-196 of the switch matrix 120 are connected to the corresponding K inputs of the respective charging points 130. The K outputs 101-106 of the charging points 130 are connected to the corresponding electric vehicles 171-176.

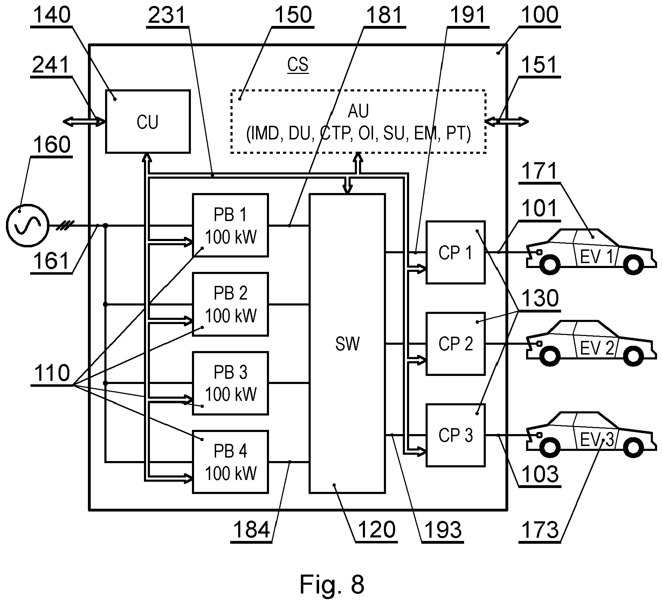

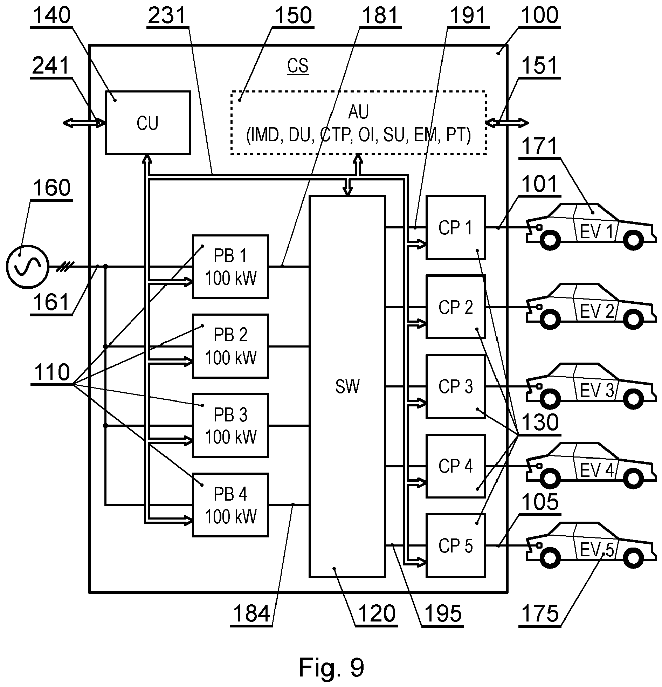

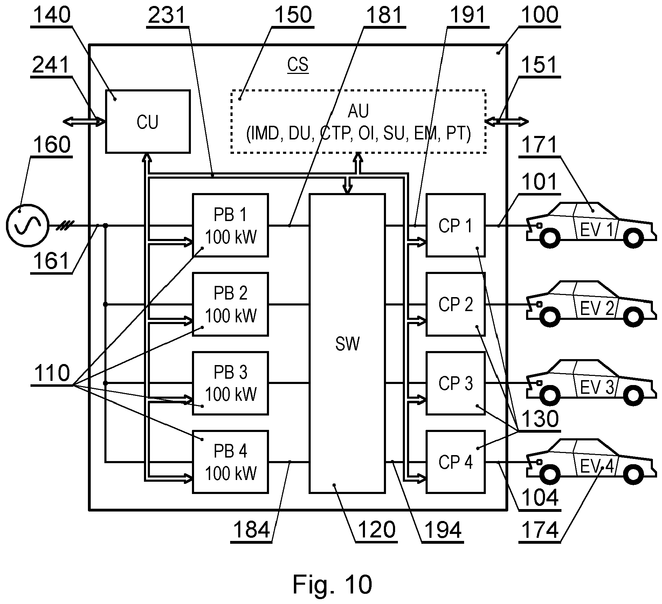

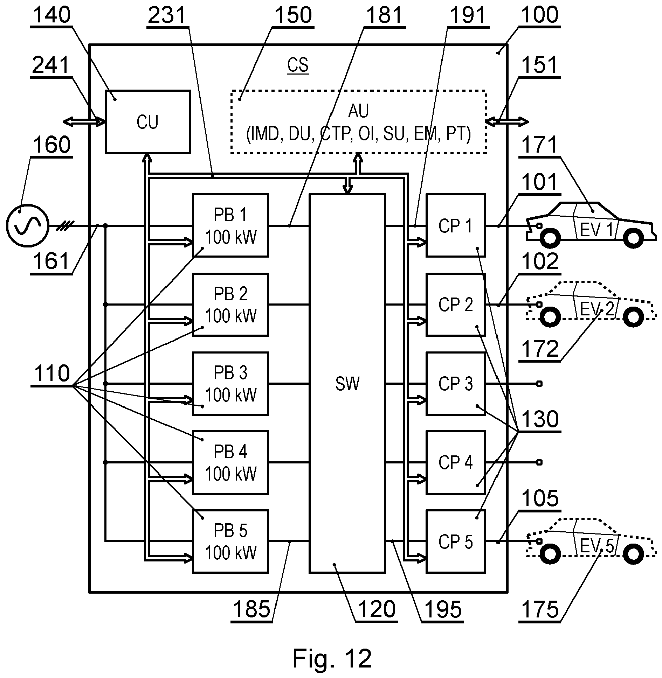

The number (N) of the power blocks 110 and the number (K) of the charging points 130 may be equal to each other (as shown in Fig. 10 and Fig. 12). However, it is possible for the number of the power blocks 110 and the number of the charging points 130 to be different from each other, namely for N>K or N<K. In the preferred embodiment wherein N>K (as shown in Fig. 8), N-K power blocks 110 are redundant power blocks that can be used as additional power blocks or as replacement power blocks in the case of failure of one or more power blocks, so as to provide required functionality of the charging substation. The case where N<K (as shown in Fig. 9) may be applicable if any of the power blocks 110 has been damaged or temporarily switched off due to an emergency situation, for example the need to cool down a particular power block 110.

The N power blocks 110, each with a rated power of P_{PB}, form a set of power blocks having a total power of N×P_{PB}. It is possible for some of the installed power blocks 110 to be in operation at a particular moment. Additionally, it is possible that each power block 110 has a different power rating, for example as a result of damage or temporary shutdown of the power module or modules 311-316 from which it is formed. Then, the power of a set of power blocks is equal to the sum of their individual powers (P_{PB_1}+P_{PB_2}+...+P_{PB_N}).

The charging station 100 may comprise additional units (AU) 150: an insulation monitoring unit (IMU); a display unit (DU); a control panel (CTP) such as a keyboard and/or control buttons; other (different) communication interfaces (OI); a sensors module (SU) such as a temperature sensor; an energy meter (EM); a payment terminal (PT) and other modules not shown in Fig. 1.

Communication between the control unit 140 and the units 110, 120, 130 and 150 is effected via a serial bus 231. The control unit 140 of the charging station 100 may also communicate with other charging stations and/or a remote management and control system using a connector 241. An additional connector 151 (such as an Ethernet, Wi-Fi, or another wired or wireless standard) allows the charging station 100 to communicate with other external systems, such as a banking payment system or power grid management system 160.

Fig. 2 shows a detailed functional diagram of the power blocks 110 of Fig. 1. As shown in Fig. 2, the power block (PB) 110 comprises: at least two power modules PM 311-316, a connection 161 to the power grid 160 and an output 181 (parallel connection outputs of power modules 311-316) connected to the corresponding input of the switch matrix 120.

The serial bus 231 provides communication between the control unit 140 and the power modules 311-316.

The control unit 140, based on the data stored in the digital memory 220, the number of charged vehicles 171-176 and the values of charging current and/or voltage reported by them, sets the operating parameters of each power module 311-316 from which the particular power block 110 is formed.

The M inputs (M≥2) of power modules 311-316 are connected in parallel and are connected to the connection 161 to the power grid 160.

The M power modules 311-316, each having a rated power P_{PM}, form a power block 110 having a total rated power P_{PB} = M×P_{PM}. It is possible that some of the installed Power Modules 311-316 are in operation at any given time. Each power block 110 has the same number of power modules 311-316.

Fig. 3 shows a detailed diagram of the configurable output matrix circuit - the switch matrix SW 120 of Fig. 1. The switch matrix 120 comprises a switch matrix controller (SC) 510 and K sets of switches 521-526. Each output 181-186 of a particular power block 110 is connected in parallel to the K inputs of the corresponding set of switches 521-526. The particular output 191-196 of the switch matrix 120 is then connected to the corresponding charging point 130 (CP 1, CP 2, ..., CP K). The switch states of the individual sets of switches 521-526 are controlled via the data and control bus 511 via the controller 510. The switch matrix controller 510 sets the individual switches 521-526 based on data received from the control unit 140 via the serial bus 231. Such control can be also based on data from the control units 410 of the individual charging points 130.

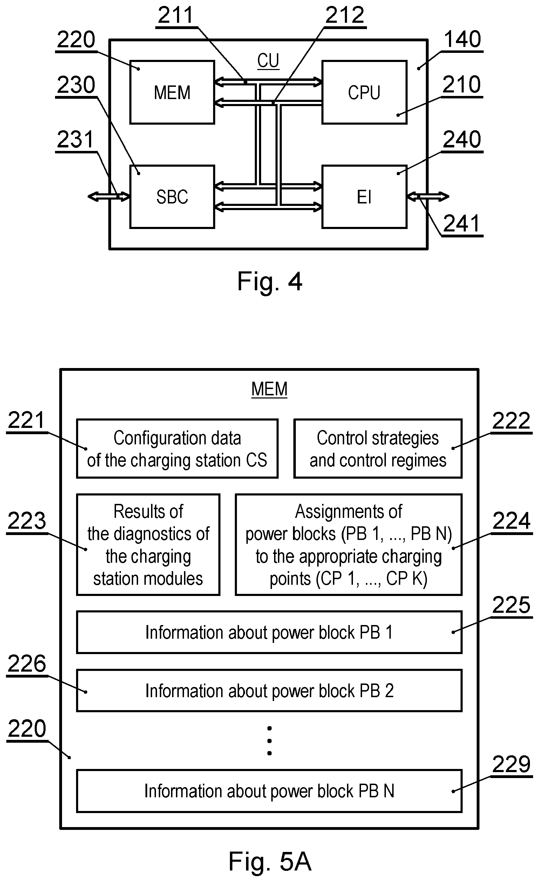

Fig. 4 shows the internal structure of the control unit (CU) 140, managing the operation of the charging station 100. The control unit 140, using the serial bus 231, controls and monitors the operation of: each of the power blocks 110 (power modules 311-316 within a particular power block 110), the charging station 130 and the switch matrix 120.

The control unit 140 comprises: a central processing unit (CPU) module 210; a digital memory module (MEM) 220 (such as RAM, Flash); a serial bus controller module (SBC) 230, controlling the transmission over the serial bus 231 (supported in one of the standards: CAN, RS485 or other); an External Interfaces (EI) communication module 240, providing communication with a central charging station management system (not shown here) or other charging station via a link 241, such as the Ethernet, Wi-Fi or another wired or wireless standard. The communication between the CPU module 210 and the modules 220, 230, 240 is carried out using the data and control bus 211 and the address bus 212.

Depending on the adopted strategy and control regime 222 (as shown in Fig. 5A) of the charging station, the number of charged vehicles 171-176 and the values of charging current and/or voltage reported by them, the control unit 140 (CPU module 210) decides which power blocks 110 and with what operating parameters of their respective power modules 311-316 will be connected to the particular charging point 130 and consequently to the vehicle 171-176. Each of the power blocks 110 (each power module 311-316 of which they are formed) performing charging receives from the control unit 140 (CPU module 210) information about the value of the charging power and/or charging current/voltage.

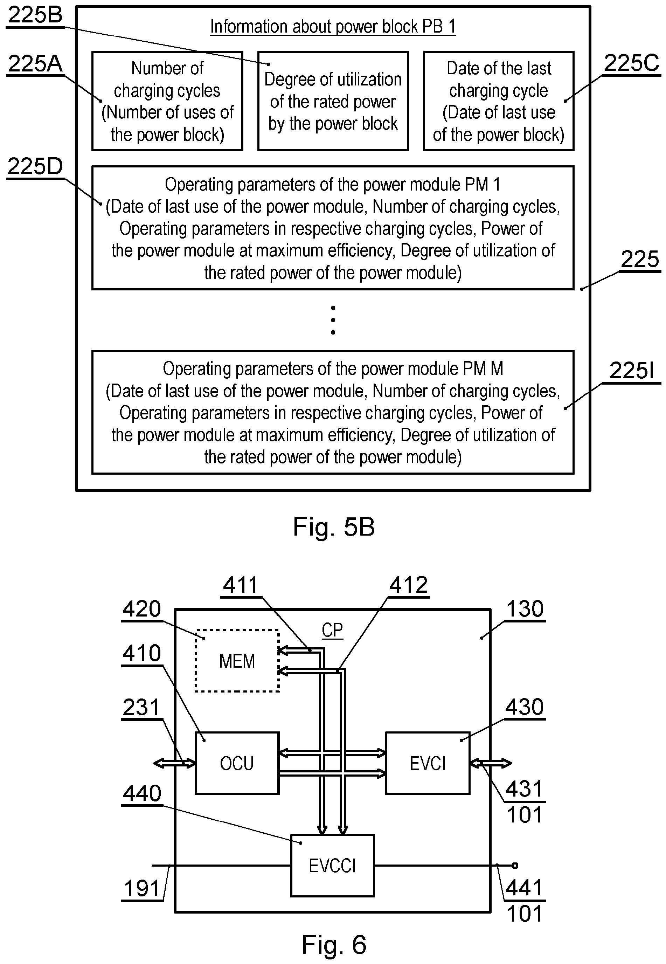

Fig. 5A and Fig. 5B show data stored in the digital memory MEM 220 of the control unit 140. The data is stored in containers, such as tables or other types of data containers.

The dataset of Fig. 5A includes specific information specifying multiple types of parameters defined in the data containers 221-229. This information is updated by the CPU module 210 of the control unit 140 based on the operations performed by the individual modules of the charging station 100 during its operation and can also be changed remotely by the operator of the charging station system.

The data set 221 stores the configuration data of the charging station, for example specifying the number and types of modules installed in a particular charging station 100, types of outputs 101-106 used in the charging points 130 (the type of the cable and the pantograph connector and their operating parameters), determining the priorities of individual outputs 101-106 at the charging points 130 (for example strictly defined priorities for each output, one output with the highest priority or priority of outputs based on the order in which the charging request is made at individual charging points 130), the location data of the charging station 100 and its type ("depot" or "loop"), etc.

The charging station control strategies specifying the control (use and sharing) of the power blocks 110 are stored in the data set 222. The charging station control strategies may be as follows:
(a) using (sharing) the power blocks 110 without assigning them to specific charging points 130;
(b) using (sharing) the power blocks 110 according to their defined assignment to specific charging points 130.

For each of the examples of control strategies described above, it is possible to define the maximum load capacities of the individual outputs 101-106 at the charging points 130, which are stored in the data set 221.

The sharing of power blocks 110 without assigning them to specific charging points 130 provides the greatest freedom of reconfiguration of the output circuits of the charging station (the outputs 101-106 of the charging points 130) and allows for very flexible shaping of their load capacity.

The control regime 222 of the charging station 100 depends on the selected control strategy, the type of station ("depot" or "loop") and the prioritization of individual outputs 101-106 at the charging points 130. For example, when the charging station 100 operates in the power block sharing control strategy with their defined assignment to specific charging points 130 and only one output from among the outputs 101-106 has been specified as the output with the highest priority, the control can be carried out in two regimes:
- Full priority (FP), wherein individual power blocks 110 are connected to the output with the highest priority both in the event of an incident of a charging session on outputs 101-106 and in the absence of such an incident, individual power blocks 110 are disconnected from their dedicated outputs 101-106 until the requested power is delivered to the vehicle (171-176) connected to it. First, the power blocks 110 assigned to those outputs 101-106 of the charging points 130 where no charging sessions are carried out are connected to the output with the highest priority and then the power blocks 110 assigned to the least loaded outputs 101-106. The power blocks 110 are "returned" to their dedicated outputs 101-106 only after the end of the charging session on the output with the highest priority. This type of control temporarily limits the access to the lower-priority outputs and is therefore used in charging stations intended for quick, emergency charging of vehicles withdrawn from the route in an emergency.
- Mild priority (MP), wherein individual power blocks 110 dedicated to the currently inactive outputs 101-106 are automatically connected to the output with the highest priority, but only in the absence of charging sessions on outputs 101-106. The power blocks 110 connected to the output with the highest priority are immediately "restored" to their dedicated outputs 101-106 when the vehicle 171-176 is connected to them.

Information about the assumed control regime (FP, MP), determined in the case of defining only one output with the highest priority among the outputs 101-106, is stored in the data set 222.

The data set 223 stores the results of the diagnostics of the modules of the charging station 100 each time the charging station is restarted. Based on the data 223, the control unit 140 determines information about correctly operating and/or damaged modules of the charging station and makes decisions about starting a limited or a full operation. In addition, the data set 223 may be sent by the control unit 140 (via interface 241) to the charging station system operator.

The data set 224 contains information about the assignment of the individual power blocks 110 (PB 1-PB N) to the respective charging points 130 (CP 1-CP K). An example of an assignment of power blocks 110 (PB 1-PB N) to the respective charging points 130 (CP 1-CP K), in the case where N=K (Fig. 10, Fig. 12), can be as follows: PB 1 → CP 1, PB 2 → CP 2, ..., PB N → CP K.

The datasets 225-229 store information about specific operating parameters for the power blocks 110 (PB 1-PB N) and the power modules 311 - 316 (PM 1-PM M) within the particular power block 110.

An example of a data set 225 for the power block PB 1 is shown in Fig. 5B. The other data sets 226-229, for the power blocks PB 2 - PB N respectively, are organized in the same way as for the data set 225.

The data sets 225A, 225B and 225C store information about: the number of charging cycles (sessions), the degree of utilization of the rated power of the power block and the date of the last charging cycle (session) in which the power block PB 1 was used. The data sets 225D-225I store information about: the date of the last use, the number of charging cycles, the operating parameters (for example charging power and/or charging current/voltage), the power achieved at the maximum efficiency and the degree of utilization of the rated power of the power module for the power modules 311-316 (PM 1-PM M) installed in the power block PB 1.

The information stored in the data sets 225-229 is used by the control unit 140 (the CPU module 210) to determine:
- which of the power blocks 110 (PB 1 - PB N) should be used in the next charging cycle in the first place (for example those that took part in the smallest number of charging cycles, operated with parameters lower than the rated ones and/or the degree of utilization of the power block's rated power was the smallest);
- operating parameters of the power modules 311 - 316 (PM 1 - PM M) within the particular power block 110, determined with particular emphasis on: the power achieved at the maximum efficiency, the number of charging cycles and/or the degree of utilization of the rated power of a particular power module.

This action results in that the power blocks 110 and the power modules 311 - 316 installed therein are used as evenly as possible, thereby reducing the aging or wear of the power blocks and modules and the failure rate of the charging station.

Fig. 6 shows a detailed block diagram of the charging points of Fig. 1. Referring to Fig. 6, the charging point (CP) 130 comprises: an output control unit (OCU) 410; a digital memory (MEM) 420, such as RAM or Flash; electric vehicle communication interface (EVCI) 430 and electric vehicle charging cable (power cable) interface (EVCCI) 440. The communication between the OCU module 410 and the modules 420, 430, 440 is carried out using a data and control bus 411 and an address bus 412. The control unit 410 is responsible for communication with the charged vehicle 171 - 176 using the connection 431 and with the control unit 140 (CPU module 210) using the serial bus 231.

Each of the charging points 130 is adapted to charge vehicles 171 - 176 in at least one of the applicable charging standards, such as: CHAdeMO 2.0, CCS Type 2 or another. The charging standard determines the use of a particular connection 101 - 106 (power connector and wires 441 and signal wires 431) between the charging points 130 and the vehicles 171 - 176.

The communication with the vehicle 171 - 176 is carried out in the charging standard supported by the vehicle 171 - 176 and the charging point 130, such as: CAN (CHAdeMO), Control Pilot (CCS) or another.

In addition, the charging point 130 may monitor the value of charging power and/or voltage/current and store information about these parameters in the digital memory 420.

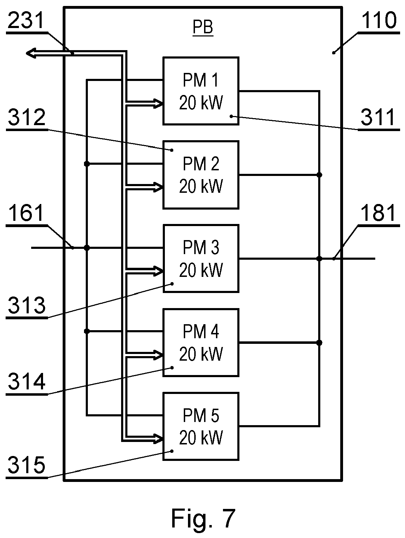

Fig. 7 shows an example of a configuration of the power block of Fig. 8. The power block 110 has five power modules 311 - 315, each having a power rating of 20 kW. The maximum power of the power block 110 configured in this way is 100 kW.

Fig. 8, Fig. 9, and Fig. 10 show the first, second and third examples of a configuration of the charging station 100 of Fig. 1 using power blocks 110 configured according to Fig. 7.

Fig. 8 shows a first example of a configuration of the charging station 100, which contains: four power blocks 110 (PB 1, PB 2, PB 3, PB 4), each rated at 100 kW; the switch matrix 120 with four inputs 181 - 184 and three outputs 191 - 193 and three charging points 130. The charging station 100 configured in this way enables simultaneous charging of up to three vehicles 171 - 173 with different maximum charging powers, resulting from the adopted station control strategy, priority of outputs and using power blocks 110, for example vehicle 171 can be charged with a maximum power of 200 kW (PB 1 → 100 kW, PB 4 → 100 kW), vehicle 172 with a maximum power of 100 kW (PB 2 → 100 kW), vehicle 173 with a maximum power of 100 kW (PB 3 → 100 kW) or vehicle 171 with 100 kW (PB 1 → 100 kW), vehicle 172 with a maximum power of 200 kW (PB 2 → 100 kW, PB 4 → 100 kW), vehicle 173 with a maximum power of 100 kW (PB 3 → 100 kW), etc.

Fig. 9 shows a second example of a configuration of the charging station 100, which comprises: four power blocks 110 (PB 1, PB 2, PB 3, PB 4), each with a rated power of 100 kW; the switch matrix 120 with four inputs 181 - 184 and five outputs 191 - 195 and five charging points 130. The charging station 100 configured in this way enables simultaneous charging of up to four out of five vehicles 171 - 175 with maximum charging powers of 100 kW. Such a charging station solution is not commonly used, but it can represent the operation of a charging station, in the case of failure of one or more of the power blocks nominally installed in it.

Fig. 10 shows a third example of a configuration of the charging station 100, which comprises: four power blocks 110 (PB 1, PB 2, PB 3, PB 4), each with a rated power of 100 kW; the switch matrix 120 with four inputs 181 - 184 and four outputs 191 - 194 and four charging points 130. The charging station 100 constructed in this way enables simultaneous charging of up to four vehicles 171 - 174 with maximum charging powers of 100 kW.

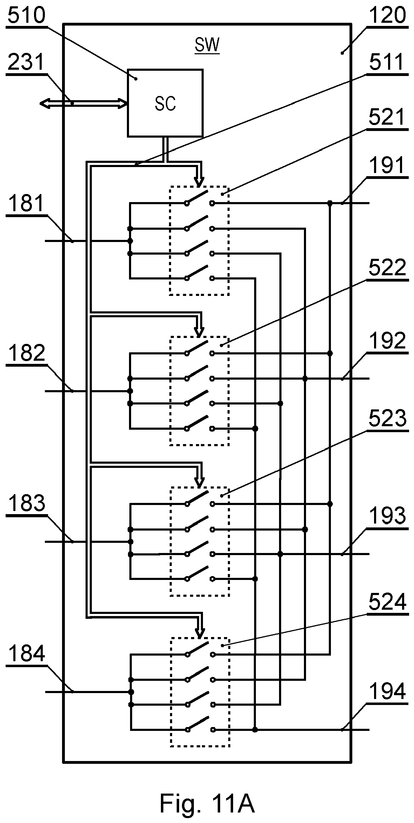

Fig. 11A shows a first preferred embodiment of an arrangement of the switch array 120 used in the charging station of Fig. 10. The total number of switches used in the switch sets 521 - 524 is a direct result of the number of power blocks 110 (N) and the number of charging points 130 (K) and is equal to: N×K for the DC bus shown schematically in Fig. 11A and 2×N×K for real bipolar (DC+ and DC-) DC connections. The switch matrix 120 constructed in this way provides high freedom of connection with easy configuration logic.

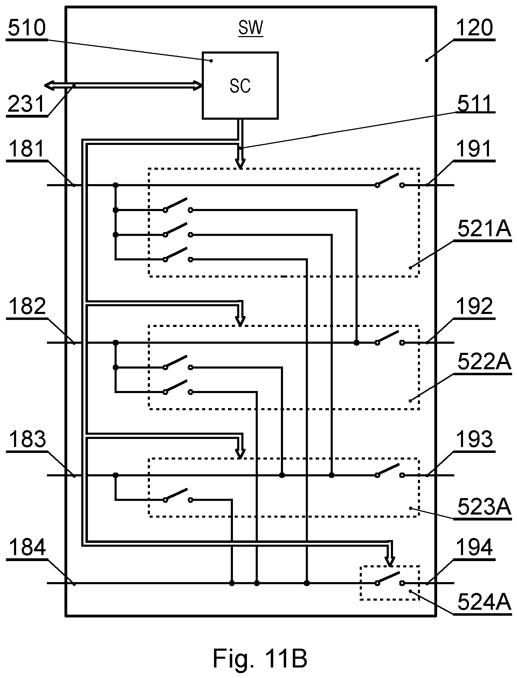

Fig. 11B shows a second embodiment of the switch matrix 120 that can be used in the charging station of Fig. 10. This embodiment of the switch matrix 120 contains fewer switches (used in switch sets 521A - 524A) as compared to the embodiment of Fig. 11A but has a complex configuration logic.

Fig. 12 shows a fourth example of a configuration of the charging station 100 of Fig. 1 (using power blocks 110 configured according to Fig. 7) in charging situations: one vehicle (171), then two vehicles (171 and 172) and then three vehicles (171, 172 and 173) simultaneously. The charging station comprises: five power blocks 110 (PB 1, PB 2, PB 3, PB 4, PB 5) assigned to particular charging points (PB 1 → CP 1, PB 2 → CP 2, ..., PB 5 → CP 5), each with a rated power of 100 kW; the switch matrix 120 with five inputs 181 - 185 and five outputs 191 - 195 and five charging points 130. The charging station 100 configured in this way enables simultaneous charging of five vehicles 171 - 175 with maximum charging powers of 100 kW.

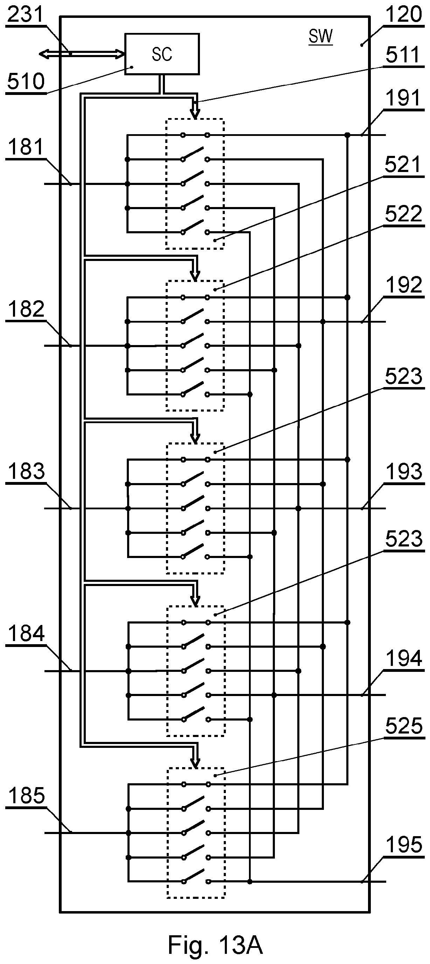

Figs. 13A - 13C show successive configurations of the switch matrix 120 for the situations depicted in Fig. 12, where it is possible to freely use the power blocks 110 assigned to the respective unused charging points 130.

The situation of Fig. 12 refers to an electric vehicle 171 charged at the charging point CP 1. The charging station 100 allows charging of the electric vehicle 171 with a maximum charging power of 500 kW. The arrangement of the switch states in the switch sets 521 - 525 of the switch matrix 120, providing the 500 kW charging capacity, is shown in Fig. 13A. The actual maximum charging power of the vehicle 171 will result from the charging parameters (I_{CHG_MAX} and U_{CHG}) reported by the vehicle 171.

In the situation shown in Fig. 12, when during the charging of the electric vehicle 171 at the charging point CP 1, a second electric vehicle 172 is connected at the charging point CP 2 and in particular due to the assignment of the power block PB 2 to the charging point CP 2, the control unit 140:
- informs the vehicle 171 about the need to disconnect the power block PB 2 therefrom;
- disconnects (via the switch matrix controller 510) the output 182 of the power block PB 2 (in the switch set 522) from the output 191 of the switch matrix 120, connected previously to the charging point CP 1;
- determines, on the basis of the adopted strategy and control regime and the charging parameters (I_{CHG_MAX} and U_{CHG}) reported by the vehicle 172, new values of maximum charging power for electric vehicles 171 and 172 and determines the operating parameters of power modules 311 - 316 for individual power blocks 110;
- reconfigures (via the switch matrix controller 510) the switch matrix 120 (switch settings in individual switch sets 521 - 525) to provide predetermined maximum charging powers;
- controls the continuation of the charging session for vehicle 171 at the charging point CP 1 with the maximum possible charging power of 300 kW and starts the charging session for vehicle 172 at the charging point CP 2 with the maximum possible charging power of 200 kW.

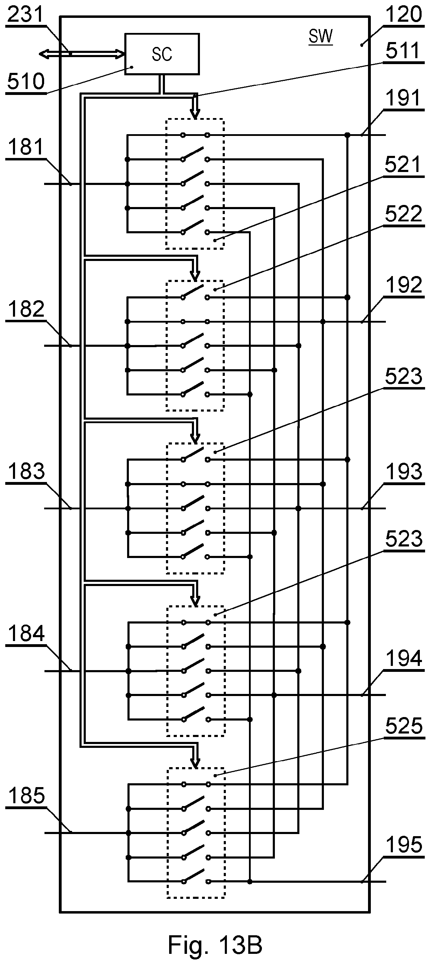

Fig. 13B shows an example of a configuration of the switch states in the switch sets 521 - 525 of the switch matrix 120, providing maximum charging powers of 300 kW for the vehicle 171 and 200 kW for the vehicle 172. Other possible settings of the switch states in the switch sets 521 - 525 of the switch matrix 120 result from the fact that power blocks 110 are freely managed, assigned to those charging points 130 where charging sessions are not carried out. The actual maximum charging power of the vehicle 172 will result from the charging parameters (I_{CHG_MAX} and U_{CHG}) reported by the vehicle 172.

In the situation of Fig. 12, when during the charging of the electric vehicle 171 at the charging point CP 1 and the charging of the electric vehicle 172 at the charging point CP 2, the next, third electric vehicle 175 at the charging point CP 5 is connected and due to the assignment of the power block PB 5 to the loading point CP 5, the control unit 140:
- informs the vehicle 171 about the need to disconnect the power block PB 5 therefrom;
- disconnects (via the switch matrix controller 510) the output 185 of the power block PB 5 (in the switch set 525) from the output 191 of the switch matrix 120, connected previously to the charging point CP 1;
- determines, on the basis of the adopted strategy and control regime as well as the charging parameters (I_{CHG_MAX} and U_{CHG}) reported by the vehicle 175, new maximum values of charging power for electric vehicles 171, 172 and 175 and determines the operating parameters of power modules 311 - 316 for individual power blocks 110;
- reconfigures (via the switch matrix controller 510) the switch matrix 120 (switch settings in individual switch sets 521 - 525) to provide predetermined maximum charging powers;
- controls the continuation of the charging session for vehicles: 171 at the charging point CP 1 with the maximum possible charging power of 200 kW and 172 at the charging point CP 2 with the maximum possible charging power of 200 kW and starts a charging session for the vehicle 175 at the charging point CP 5 with the maximum possible charging power of 100 kW.

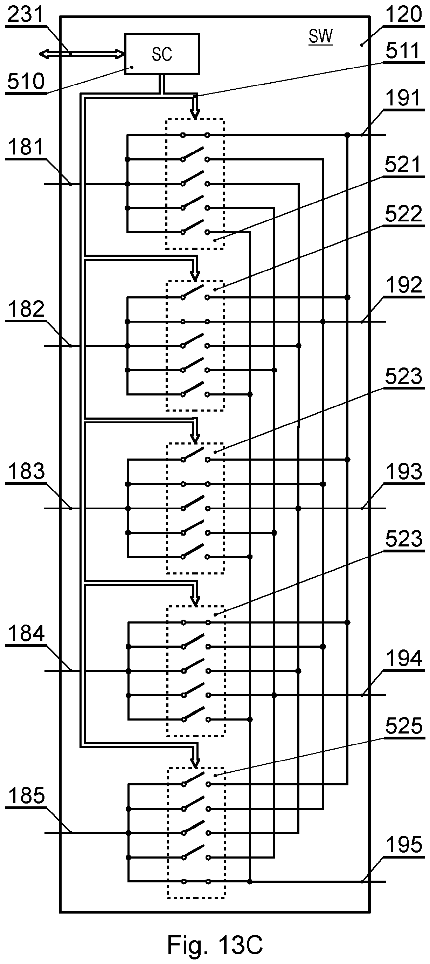

Fig. 13C shows the settings of the switch states in the switch sets 521 - 525 of the switch matrix 120, providing maximum charging powers of 200 kW for vehicle 171, 200 kW for vehicle 171 and 100 kW for vehicle 175.

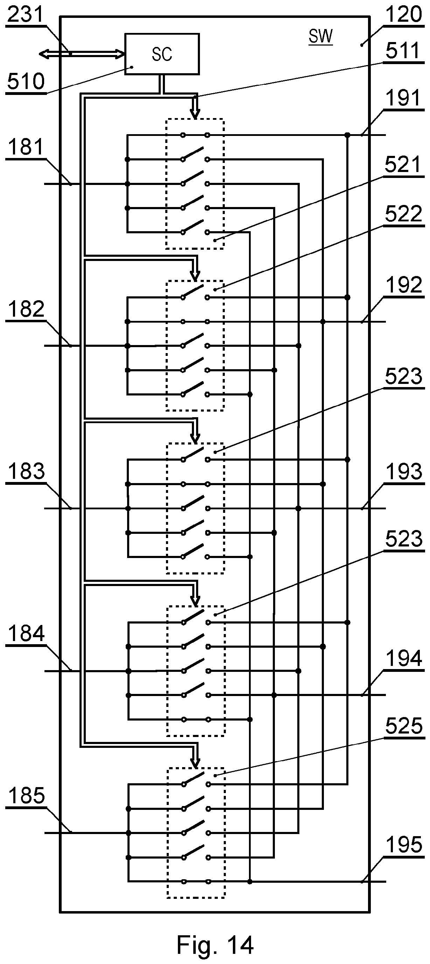

Fig. 14 shows the configuration of the switch matrix 120 in a situation of charging three electric vehicles simultaneously (as in Fig. 12) but in the case where it is possible to use only those power blocks 110 that are assigned to the corresponding unused charging points 130 located adjacent to the used ones. For example, the power block PB 4 cannot be used by the recharging point CP 1 because the corresponding recharging point CP 4 is not adjacent to the recharging point CP 1, but only to the recharging points CP 3 and CP 5. Similarly, the charging point CP 2 can use the power block PB 3, because the corresponding charging point CP 3 is adjacent to the charging point CP 2. With such limitations, it becomes possible to simultaneously charge three electric vehicles: 171, 172 and 175 with the following maximum values of charging power: 100 kW for the vehicle 171 (using the power block PB 1), 200 kW for the vehicle 172 (using the power blocks PB 2 and PB 3) and 200 kW for the vehicle 175 (using the power blocks PB 5 and PB 4).

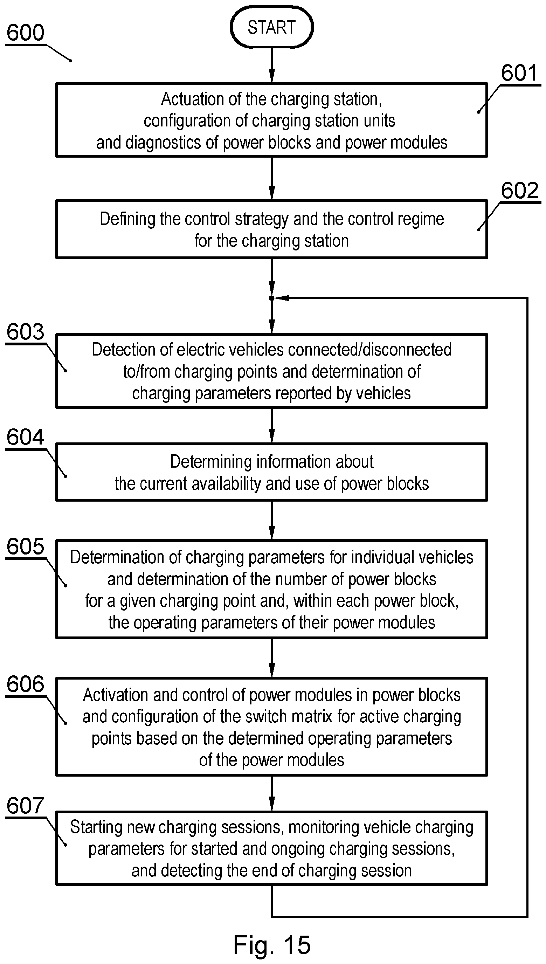

Fig. 15 presents a general method 600 for controlling the charging station 100 of Fig. 1. The process of controlling the charging station 100 after each shutdown of the station, whether due to service work or a failure, starts with the initial start-up of the charging station by the control unit 140 in step 601. In this step, after the charging station is turned back on, the control unit 140 configures all components of the station according to the settings stored in the memory 220 in the data set 221. Next, diagnostics of the units/modules installed in the charging station, for example power blocks 110, power modules 311 - 316 and charging points 130, is performed. The diagnostic results (for example information about damaged units/station modules) are stored in the memory 220 in the data set 223 and sent via the connector 241 to the remote management system of the charging station and the damaged units/modules of the charging station 100 are taken out of service. In step 602, the control unit 140, based on the information in the data sets 221, 223 and 224 (stored in the memory 220), determines the strategy and control regime of the charging station 100 and the information about the strategy and control regime is stored in the data set 222. In the next step 603, the charging station 100 enters a normal operating mode related to detecting electric vehicles 171 - 176 connected/disconnected to/from the charging points 130 and determining, via the control units 410 of the charging points 130, the charging parameters reported by these vehicles. In step 604, the control unit 140 monitors the current use and availability of the power blocks 110 and the operating parameters of their power modules 311 - 316. The monitoring results are stored in the memory 220 in the data sets 225 - 229 each time the use of a particular power block 110 is detected. Then, in step 605, the control unit 140 determines the charging parameters of the individual vehicles 171 - 176 and determines for a particular charging point 130 the number of power blocks 110 along with the operating parameters of their power modules 311 - 316, based on: the strategy and control regime of the charging station 100 (determined in step 602), the number of vehicles 171 - 176 connected to the station and the information stored in the memory 220 in the data set 224. In step 606, based on the data and parameters determined in step 605 and the adopted control strategy and regime, for the active charging points 130, the control unit 140:
- sets the operating parameters of the power modules 311 - 316 in the power blocks 110;
- configures, via the switch matrix controller 510, the state settings of individual switches in the switch sets 521 - 525 of the switch matrix 120.

Subsequently, in step 607, the control unit 140 starts new charging sessions and continues the initiated charging sessions with the predetermined charging parameters, monitors the current charging parameters reported by the charging vehicles 171 - 176 and detects charging session terminations. Then the control 600 of the charging station 100 returns to step 603.

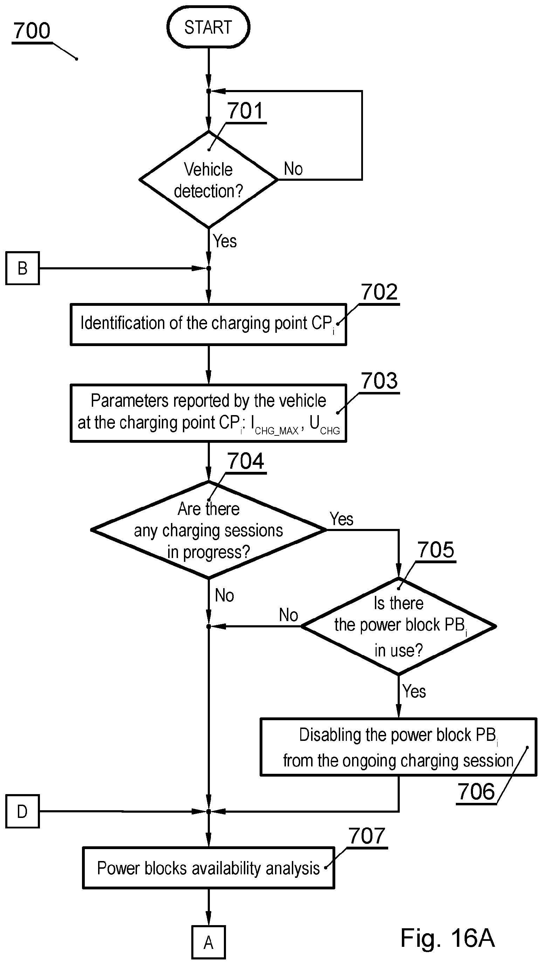

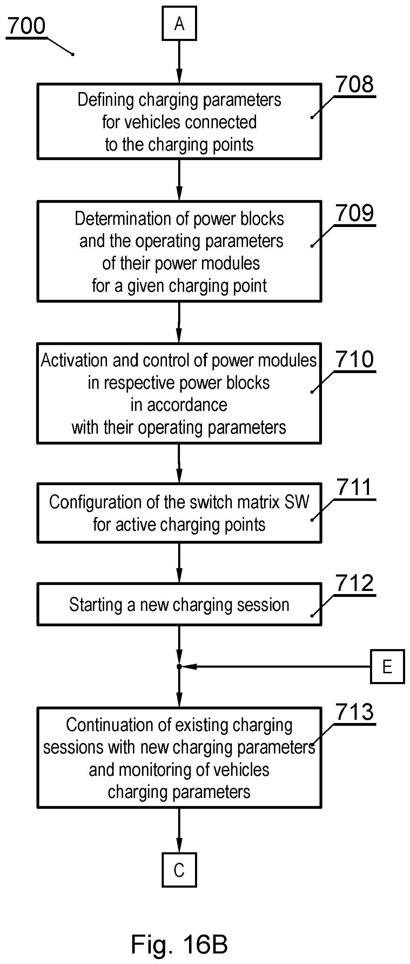

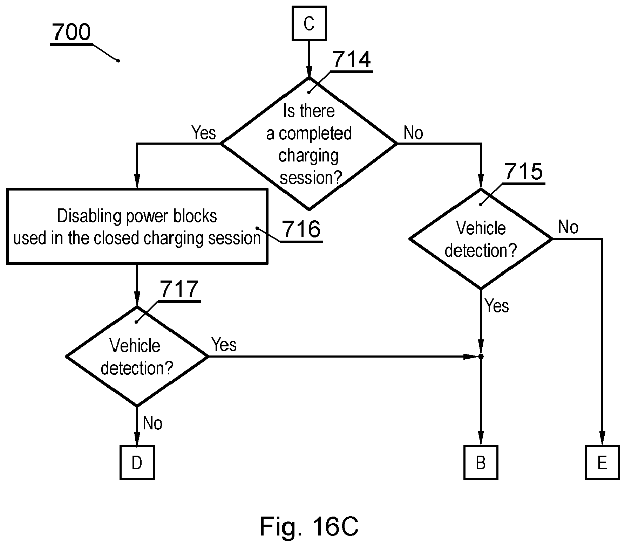

Figs. 16A - 16C show a detailed method 700 (performed by the control unit 140) for controlling the charging station 100 of Fig. 1, wherein: the number (N) of the power blocks 110 and the number (K) of the charging points 130 are equal, priorities of the outputs 101 - 107 were not defined and the following assignment of power blocks 110 to charging points 130 was applied: PB 1 → CP 1, PB 2 → CP 2, ..., PB N → CP K.

After the charging station 100 starts operation in step 701, the electric vehicle 171 - 176 connected to the charging point 130 is detected and the charging process is initiated. During the initialization of the charging process, in step 702, identification of the charging point (CPi) 130 is performed and then in step 703, the electric vehicle 171 - 176 provides the information required to start the charging. These are primarily the values of the maximum charging current I_{CHG_MAX} and the charging voltage U_{CHG}, which are distinct for different types of electric vehicles and the types and capacities of batteries used in them.

Then, in step 704, it is checked whether the charging station 100 is carrying out any previously started charging sessions. If not, the procedure proceeds to step 707. Otherwise, the procedure proceeds to step 705 where the control unit 140 checks whether the power block 110 (PBᵢ) assigned to the charging point 130 (CPᵢ) is being used to charge another electric vehicle. If the condition checked in step 705 is met, the procedure proceeds to step 706, otherwise to step 707.

In step 706, the control unit 140, via the switch matrix controller 510, changes the settings of the particular switch in the corresponding set of switches 521 - 525 of the switch matrix 120, so as to disconnect the power block PBᵢ (assigned to the charging point CPᵢ identified in step 702) from the charging point 130 where the ongoing charging session of another vehicle 171 - 176 was conducted. Before performing the operation of step 706, the control unit 140, as part of the two-way communication between the charging station and the electric vehicle, sends information (an operation not included in the control procedure of Fig. 16A) to the vehicle connected to the particular charging point about the need to disconnect the identified power block PBᵢ therefrom. This information may result in a request from the vehicle to change the charging current and its adaptation to the current capabilities reported by the station at a particular charging point. Failure to do so would result in the charging session being terminated due to a mismatch between the vehicle request and charging point capability. The control procedure then proceeds to step 707.

In step 707, the control unit 140 analyses the availability of the power blocks 110 and their sharing possibilities, resulting from the adopted control strategy 222 and the information contained in the data sets 225 - 229 of the memory 220 and the control procedure proceeds to step 708 (control path A).

In step 708, based on the data obtained in steps 707 and 703 and the monitored vehicle charging parameters for the ongoing charging sessions, new values of charging parameters are determined for all electric vehicles connected to the charging station.

Then, in step 709, the control unit 140 defines the power blocks 110 and the operating parameters of their power modules 311 - 316 for each charging point 130.

In step 710, the control unit 140, via the serial bus 231, sets the operating parameters of the power modules 311 - 316 in the individual power blocks 110, according to the parameters determined in step 709 and starts monitoring and controlling them.

Subsequently, in step 711, the control unit 140, via the switch matrix controller 510, changes the settings of the switches in the respective sets of switches 521 - 526 of the switch matrix 120 so as to provide the appropriate connection of the power blocks 110 to their defined active charging points 130.

In step 712, a new charging session is started for the last detected vehicle. Then the control procedure proceeds to step 713, where the current charging sessions are continued with the charging parameters defined in step 708 and monitoring of the charging parameters of the individual electric vehicles is performed. The control procedure then proceeds to step 714 (control path C).

In step 714, the end of the boot session is detected. If any boot session has ended, the control procedure proceeds to step 716, otherwise the control procedure proceeds to step 715.

In step 715, the electric vehicle is detected. If the electric vehicle is not detected, the control procedure returns to step 713 (control path E). If a new vehicle 171 - 176 is detected at the new charging point 130, the control procedure proceeds to step 702 (control path B).

In step 716, the control unit 140, via the switch matrix controller 510, changes the settings of the switches in the respective sets of switches 521 - 526 of the switch matrix 120 so as to disconnect the power blocks 110 from the charging point 130 where the charging session ended, and the control procedure proceeds to step 717.

In step 717, the electric vehicle is detected. If the electric vehicle is not detected, the control procedure returns to step 707 (control path D). If a new vehicle 171 - 176 is detected at the new charging point 130, the control procedure proceeds to step 702 (control path B).

## Claims

1. A charging station (100) for electric vehicles, having a matrix output with interfaces (161, 101 -106, 151, 241, 431, 441) for connection and communication with a power grid (160) and with at least one charged vehicle (171 - 176), comprising:
- at least two (N) power blocks (110), each having at least two (M) power modules (311 - 316), wherein the number (M) of power modules (311 - 316) in each of the power blocks (110) is the same;
- at least two (K) charging points (130) compliant with the corresponding outputs (101 - 106) of the charging station (100), provided with respective charging connectors (431, 441);
- additional units (150);
- an output matrix circuit - a switch matrix (120) with a specific number (N) of inputs and number (K) of outputs, enabling parallel connection of outputs (181 - 186) of power blocks (110) and their connections (191 - 196) to selected charging points (130) and consequently to the outputs (101 - 106) of the charging station (100);
- a control unit (140) that manages, via the bus (243), the configuration of the charging station (100) and is responsible for controlling and communicating with: each of the power blocks (110) and their power modules (311 - 316), the output matrix circuit - the switch matrix (120) and the charging points (130);
**characterized in that** the control unit (140), depending on: configuration data (221), diagnostic results (223), assignment (224) of power blocks (110) to charging points (130), number of charged vehicles (171 - 176) and charging parameters reported by them (I_{CHG_MAX} and U_{CHG}):
a) defines control strategies for the charging station:
- using and sharing power blocks (110) without assigning them to specific charging points (130);
- using and sharing power blocks (110) in accordance with their defined assignment to specific charging points (130);
b) sets the charging station control regime (FP, MP);
c) configures, using the controller (510), the output matrix circuit - the switch matrix (120) by setting individual switches in the sets of switches (521 - 526), providing a parallel connection of the outputs (181 - 186) of selected power blocks (110) and their connections (191 - 196) to specific charging points (130) and consequently to the outputs (101 - 106) of the charging station (100);
d) determines which of the power blocks (110) should be used in the next charging cycle and in what order, taking into account the number of charging cycles (225A) and/or the degree of utilization of the rated power of the power block (225B);
e) determines the operating parameters (charging current and voltage) for the power modules (311 - 316) within each power block (110), taking into account the selected operating parameters of the power module (225D - 225I): the power at which the module reached maximum efficiency, the number of cycles and/or the degree of utilization of the rated power of the particular power module.

2. The charging station according to claim 1, **characterized in that** any power block (110) can be connected to any single charging point (130), corresponding to the equivalent output (101 - 106) of the charging station (100), equipped with a charging connector (431, 441) through appropriately configured output matrix circuit - the switch matrix (120).

3. The charging station according to claim 2, **characterized in that** a specific number (N) of unused power blocks (110) can be simultaneously connected to a selected single charging point (130) through a suitably configured output matrix circuit - the switch matrix (120).

4. The charging station according to claim 2, **characterized in that** only one unused power block (110) can be connected to the selected single charging point (130) through a suitably configured output matrix circuit- the switch matrix (120).

5. The charging station according to claim 3, **characterized in that** those unused power blocks (110), for which the number of charging cycles (225 A) and/or the degree of utilization of the rated power of the power block (225B) is the smallest, are connected first to the selected charging point (130).

6. The charging station according to claim 4, **characterized in that** the unused power block (110), for which the number of charging cycles (225A) and/or the degree of utilization of the rated power of the power block (225B) is the smallest, is connected to the selected charging point (130).

7. The charging station according to claim 2, **characterized in that** the unused power blocks (110) are connected first to the charging point (130) - the output (101 - 106) with the highest priority through a suitably configured output matrix circuit - the switch matrix (120).

8. The charging station according to claim 7, **characterized in that** the highest priority is permanently assigned to the selected charging point (130) - the output (101 -106).

9. The charging station according to claim 7, **characterized in that** priority is assigned to the charging points (130) - the outputs (101 - 106) depending on the order of requests for activation of charging sessions - the cycles at a particular charging point (130) - the output (101 - 106).

10. The charging station according to claim 7, **characterized in that** each charging point (130) - the output (101 - 106) has a strictly defined priority.

11. The charging station according to claim 2, **characterized in that** the individual power modules (311 - 316) in each selected power block (110) are activated and controlled sequentially until the required total power of the power block (110) is reached, wherein the activation and the next power module (311 - 316) is effected after the previously activated power modules (311 - 316) reach the set power level.

12. The charging station according to claim 11, **characterized in that** the fixed power level for the activated and controlled power module (311 - 316) is equal to its rated power (P_{PM}).

13. The charging station according to claim 11, **characterized in that** the set power level for the activated and controlled power module (311 - 316) is equal to the power at which the particular power module (311 - 316) reaches its maximum efficiency.

14. The charging station according to claim 2, **characterized in that** individual power modules (311 - 316) in each selected power block (110) are activated and controlled according to the order resulting from the selected operating parameters of the power modules (225D - 225I), wherein the power modules (311 - 316) for which the number of charging cycles and/or the degree of utilization of the rated power of the particular power module (311 - 316) are the smallest are activated first.

15. A method for controlling (600) the charging station (100) according to any one of claims 1 - 14, implemented by the control unit (140) responsible for: configuring, managing, controlling, and communicating with the individual units (110, 120, 130, 150, 311 - 316) of the charging station (100), the method comprising the following control steps:
(601) starting the charging station (100), configuring the charging station units (110, 120, 130, 150, 311 - 316) and diagnosing the power blocks (110) and the power modules (311 - 316);
(602) determining a strategy and a control regime (222) for the charging station (100);
(603) detecting the electric vehicles (171 - 172) connected to/disconnected from the charging points (130) and determining the charging parameters (I_{CHG_MAX} and U_{CHG}) reported by the connected vehicles;
(604) determining information about the current availability and use of the power blocks (110);
(605) determining the charging parameters for the connected vehicles (171 - 176) and determining the number of power blocks (110), and operating parameters (charging current and voltage) of the power modules (311 - 316) for a particular active charging point (130) within each power block (110);
(606) activating and controlling the power modules (311 - 316) in the power blocks (110) and configuring the output matrix circuit - the switch matrix (120) for the active charging points (130), based on the set operating parameters (charging current and voltage) of the power modules (311 - 316) specified in step (605);
(607) starting new charging sessions, monitoring vehicle charging parameters (171 - 176) for the started and ongoing charging sessions and detecting the end of the charging session;
wherein the steps (603) - (607) are performed in a loop until the charging station (100) is turned off and when is turned back on, resuming controlling from step (601).

## Amended claims

### Amended claims in accordance with Rule 137(2) EPC.

1. A charging station (100) for electric vehicles, having a switch matrix with interfaces (161, 101 - 106, 151, 241, 431, 441) for connection and communication with a power grid (160) and with at least one charged vehicle (171 - 176), comprising:
- at least two (N) power blocks (110), each having at least two (M) power modules (311 - 316), wherein the number (M) of power modules (311 - 316) in each of the power blocks (110) is the same;
- at least two (K) charging points (130) compliant with the corresponding outputs (101 - 106) of the charging station (100), provided with respective charging connectors (431, 441);
- additional units (150);
- a switch matrix (120) with a specific number (N) of inputs and number (K) of outputs, enabling parallel connection of outputs (181 - 186) of power blocks (110) and their connections (191 - 196) to selected charging points (130) and consequently to the outputs (101 - 106) of the charging station (100);
- a control unit (140) that manages, via a bus (243), the configuration of the charging station (100) and is responsible for controlling and communicating with: each of the power blocks (110) and their power modules (311 - 316), the switch matrix (120) and the charging points (130);
**characterized in that** the control unit (140), depending on at least: assignment (224) of power blocks (110) to charging points (130), number of charged vehicles (171 - 176) and charging parameters reported by them (I_{CHG_MAX} and U_{CHG}):
a) defines control strategies for the charging station:
- sharing power blocks (110) according to dynamic assigning them to specific charging points (130);
- sharing power blocks (110) in accordance with their static assignment to specific charging points (130);
b) sets a charging station control regime (FP, MP) which depends on the selected control strategy, the type of station and the prioritization of individual outputs (101-106) at the charging points (130);
c) configures the switch matrix (120), using a controller (510) of the switch matrix, by setting individual switches in a number of sets of switches (521 - 526) of the switch matrix, providing a parallel connection of the outputs (181 - 186) of selected power blocks (110) and their connections (191 - 196) to specific charging points (130) and consequently to the outputs (101 - 106) of the charging station (100);
d) determines which of the power blocks (110) should be used in the next charging cycle and in what order, taking into account the number of charging cycles (225A) and/or the degree of utilization of the rated power of the power block (225B);
e) determines the operating parameters, i.e. charging current and voltage, for the power modules (311 - 316) within each power block (110), taking into account at least one of the operating parameters of the power module (225D - 225I): the power at which the module reached maximum efficiency, the number of charging cycles and the degree of utilization of the rated power of the particular power module.

2. The charging station according to claim 1, **characterized in that** any power block (110) can be connected to any single charging point (130), corresponding to the equivalent output (101 - 106) of the charging station (100), equipped with a charging connector (431, 441) through an appropriately configured switch matrix (120).

3. The charging station according to claim 2, **characterized in that** a specific number (N) of unused power blocks (110) can be simultaneously connected to a selected single charging point (130) through a suitably configured switch matrix (120).

4. The charging station according to claim 2, **characterized in that** only one unused power block (110) can be connected to the selected single charging point (130) through a suitably configured switch matrix (120).

5. The charging station according to claim 3, **characterized in that** those unused power blocks (110), for which the number of charging cycles (225 A) and/or the degree of utilization of the rated power of the power block (225B) is the smallest, are connected first to the selected charging point (130).

6. The charging station according to claim 4, **characterized in that** the unused power block (110), for which the number of charging cycles (225A) and/or the degree of utilization of the rated power of the power block (225B) is the smallest, is connected to the selected charging point (130).

7. The charging station according to claim 2, **characterized in that** the unused power blocks (110) are connected first to the charging point (130) - the output (101 - 106) with the highest priority through a suitably configured switch matrix (120).

8. The charging station according to claim 7, **characterized in that** the highest priority is permanently assigned to the selected charging point (130) - the output (101 - 106).

9. The charging station according to claim 7, **characterized in that** priority is assigned to the charging points (130) - the outputs (101 - 106) depending on the order of requests for activation of charging sessions - the cycles at a particular charging point (130) - the output (101 - 106).

10. The charging station according to claim 7, **characterized in that** each charging point (130) - the output (101 - 106) has a strictly defined priority.

11. The charging station according to claim 2, **characterized in that** the individual power modules (311 - 316) in each selected power block (110) are activated and controlled sequentially until the required total power of the power block (110) is reached, wherein the activation and the next power module (311 - 316) is effected after the previously activated power modules (311 - 316) reach the set power level.

12. The charging station according to claim 11, **characterized in that** the fixed power level for the activated and controlled power module (311 - 316) is equal to its rated power (P_{PM}).

13. The charging station according to claim 11, **characterized in that** the set power level for the activated and controlled power module (311 - 316) is equal to the power at which the particular power module (311 - 316) reaches its maximum efficiency.

14. The charging station according to claim 2, **characterized in that** individual power modules (311 - 316) in each selected power block (110) are activated and controlled according to the order resulting from the selected operating parameters of the power modules (225D - 225I), wherein the power modules (311 - 316) for which the number of charging cycles and/or the degree of utilization of the rated power of the particular power module (311 - 316) are the smallest are activated first.

15. A method for controlling (600) the charging station (100) according to any one of claims 1 - 14, implemented by the control unit (140) responsible for: configuring, managing, controlling, and communicating with the individual units (110, 120, 130, 150, 311 - 316) of the charging station (100), the method comprising the following control steps:
| | |
|---|---|
| (601) | starting the charging station (100), configuring the charging station units (110, 120, 130, 150, 311 - 316) and diagnosing the power blocks (110) and the power modules (311 - 316); |
| (602) | determining a strategy and a control regime (222) for the charging station (100), which depends on the selected control strategy, the type of station and the prioritization of individual outputs (101-106) at the charging points (130); |
| (603) | detecting the electric vehicles (171 - 172) connected to/disconnected from the charging points (130) and determining the charging parameters (I_{CHG_MAX} and U_{CHG}) reported by the connected vehicles; |
| (604) | determining information about the current availability and use of the power blocks (110); |
| (605) | determining the charging parameters for the connected vehicles (171 - 176) and determining the number of power blocks (110), and operating parameters, i.e. charging current and voltage, of the power modules (311 - 316) for a particular active charging point (130) within each power block (110); |
| (606) | activating and controlling the power modules (311 - 316) in the power blocks (110) and configuring the switch matrix (120) for the active charging points (130), based on the set operating parameters, charging current and voltage, of the power modules (311 - 316) specified in step (605); |
| (607) | starting new charging sessions, monitoring vehicle charging parameters (171 - 176) for the started and ongoing charging sessions and detecting the end of the charging session; |
wherein the steps (603) - (607) are performed in a loop until the charging station (100) is turned off and when is turned back on, resuming controlling from step (601).
